# EUROPEAN PATENT APPLICATION

(11) **EP 1 935 626 A1**
(43) Date of publication of application: **25.06.2008**
(21) Application number: 07123759.8
(22) Date of filing: 20.12.2007
(51) Int. Cl.: B29D 30/30

(54) **Tire assembly applier with cutter mechanism**

(30) Priority: 21.12.2006 US 876325 P
(71) Applicant: THE GOODYEAR TIRE & RUBBER COMPANY, Akron, OH 44316-0001 (US)
(72) Inventor: Downing, Daniel Ray, Uniontown, OH 44685 (US); Kent, Matthew Todd, Canton, OH 44718 (US); Baumhoer, Stephen Michael, Stow, OH 44227 (US); Porter, William Robert, Fairlawn, OH 44333 (US)
(74) Representative: Kutsch, Bernd

(57) **Abstract**

An apparatus (10) for applying a sheet of flexible material to a cylindrical body is disclosed. The apparatus includes an applier frame segment (60) movably mounted on a supporting frame member, a servo arm (80) rotatably connected to said applier frame segment (60) for retracting and extending said applier frame segment towards and away from a cylindrical body. The invention provides in a second aspect a method of applying a sheet of elastomer to a cylindrical body comprising the steps of: providing an applier frame (60) movably mounted to a frame assembly, providing the sheet of elastomer to the applier frame, pivoting the applier frame (60) upwards and moving the applier frame towards the cylindrical body, locating the applier frame (60) in an inclined position adjacent the cylindrical body, applying the sheet of elastomer to the cylindrical body, and then retracting the applier frame (60) to its starting position.

## Description

### Field of the Invention

The invention relates generally to the applying of tire sheet components such as plies or inner liners directly onto a cylindrical body such as a tire building drum and to cutting the tire component prior to application to the cylindrical body.

### Background of the Invention

Tire ply or other rubber components are often applied to a tire building drum with a conveyor type device often referred to as an applier. Prior art appliers typically utilize a conveyor type belt to precisely apply the tire component onto the tire building drum. It is important to precisely control the application of the tire component onto the drum, and is particularly of concern for the tail end of the component. It is also important that the component be applied quickly and efficiently as possible. The applier must also retract sufficiently from the drum to provide clearance for other mechanisms and functions. Further, prior art appliers typically require a separate drive and adjustment mechanism in order to make applier adjustable to different sizes of tire building drums.

The tire ply or other rubber components are typically cut on a separate machine using an anvil, thus requiring additional machinery and control systems. The presence of the anvil can create ball-ups in the stock as well as lateral guiding problems especially in cases where the stock is cut at an angle.

Thus it is desired to provide a more advanced applier having a cutter mechanism, which overcomes the disadvantages of the prior art.

### Summary of the Invention

The invention provides in a first aspect an apparatus for applying a sheet of flexible material to a cylindrical body according to claim 1.

The invention provides in a second aspect a method of applying a sheet of elastomer to a cylindrical body according to claim 10.

Dependent claims refer to preferred embodiments of the invention.

Preferably, the method of claim 10 further comprises the step of stitching the elastomer to the cylindrical body.

### Definitions

"Axial" and "axially" means the lines or directions that are parallel to the axis of rotation of the tire.

"Circumferential" means lines or directions extending along the perimeter of an annular surface perpendicular to the axial direction.

"Radial" and "radially" mean directions radially toward or away from the axis of rotation of the tire.

"Laminate structure" means an unvulcanized structure made of one or more layers of tire or elastomer components such as the innerliner, sidewalls, and optional ply layer.

### Brief Description of the Drawings

The invention will be described by way of example and with reference to the accompanying drawings in which:
FIG. 1 is a perspective view of an apparatus of the present invention;
FIG. 2 is a side view from the right hand side of Figure 1;
FIG. 2A is a side view of the applier in motion and approaching a tire building drum;
FIG. 2B is a side view of the applier in motion in contact with a tire building drum;
FIG. 3 is an end view of the tire applier of Figure 2;
FIG. 4 is a top view of the tire applier;

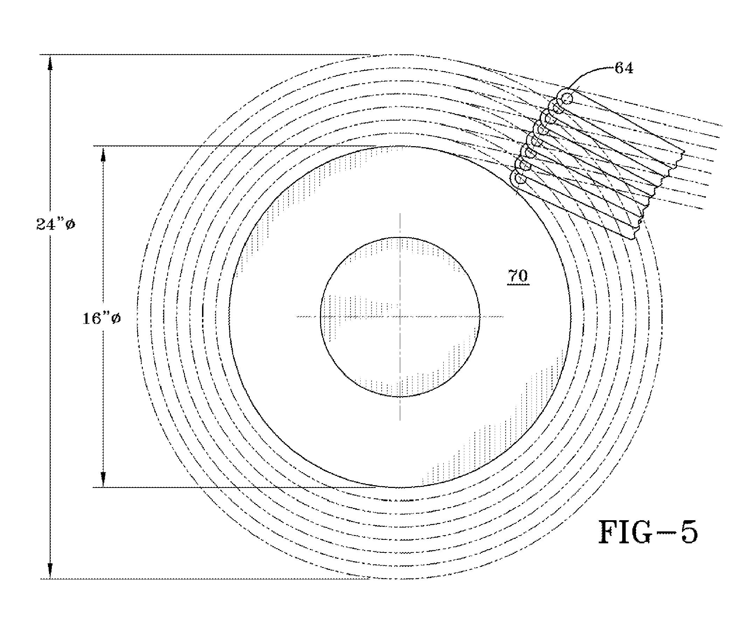

Figure 5 illustrates the adjustment feature of the tire applier front end with respect to different sizes of a tire building drum;
Figure 6 illustrates the forces on the tail end of the rubber component depending upon angle of inclination of the applier nose;
Figure 7 is a perspective view of a cutter mechanism shown together with the applier of Fig. 1;
Figure 8 is a side view of the applier and cutter mechanism of Figure 7 prior to cutting the sheet component;
Figure 9 is a side view of the applier and cutter mechanism of Figure 7 during cutting of the sheet component; and
Figure 10 is a side view of the applier and cutter mechanism of Figure 7 during cutting of the sheet component.

### Detailed Description of the Invention

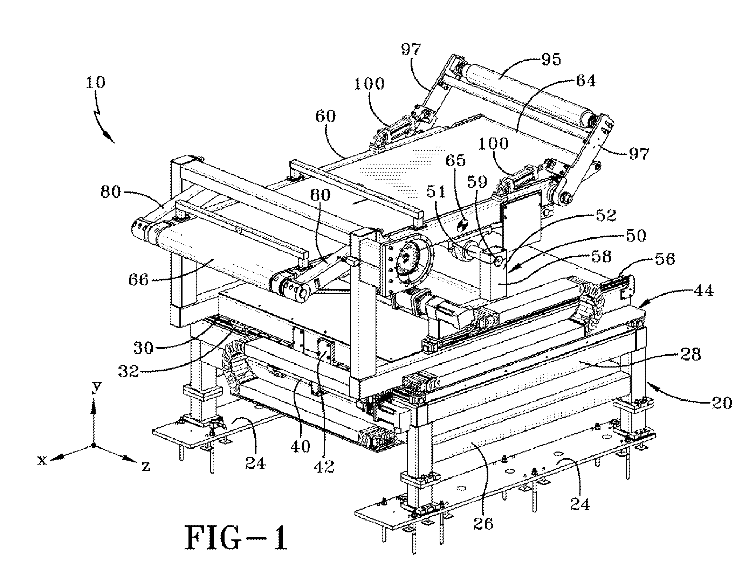

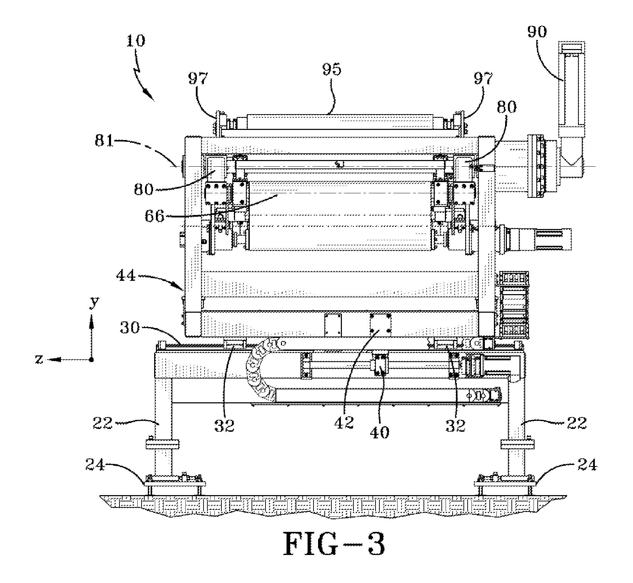

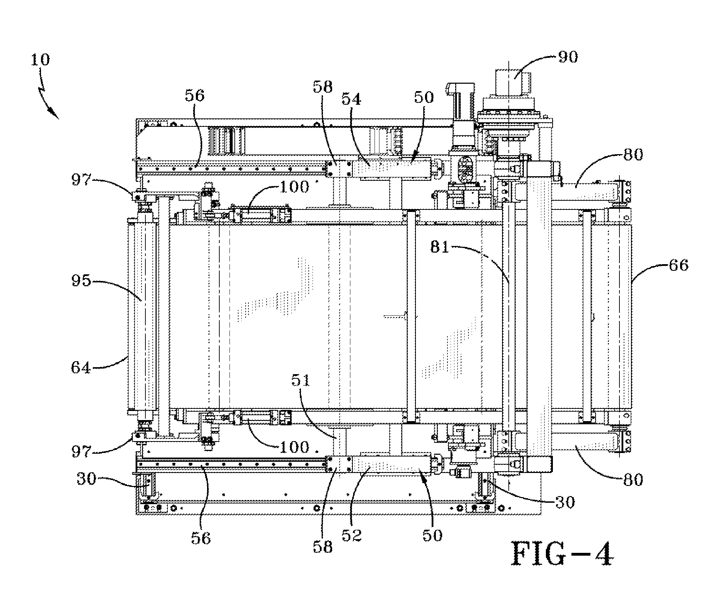

Figures 1-4 illustrate a first embodiment of a tire component applier 10 as an example of an apparatus of the present invention. The tire component may be in the form of a precut sheet and may comprise a tire liner, ply, or other component. If the tire component is ply having a plurality of parallel cords, the cords may be oriented for a bias or radial orientation. Alternatively, the tire component could be in other contoured or profiled forms such as a sidewall, chafer or chipper.

As shown in Figure 1, the tire applier 10 comprises a frame subassembly 20 having a plurality of support legs 22 which are mounted on support plates 24. Cross bars 26, 28 provide structural support to frame 20. Support plates 24 may be mounted to the floor or other support structure.

Cross bar 28 is further provided with opposed, parallel rails 30 for slidably receiving guide members 32 of the upper frame 44, so that the entire upper portion of the frame may slide on said rails 30 to allow for lateral adjustment (direction Z-Z). An actuator arm 40 is connected to the upper frame via plate 42 and slides the entire upper frame assembly 44 into a desired lateral position. The actuator arm may be for example, a ball screw. The lateral adjustment allows the applier to move in a direction parallel to the axis of the tire building drum. This allows for picking up and applying rubber components at various lateral applier positions. The rubber component may be guided either onto the applier or onto the drum if necessary.

The tire applier 10 is also slidable in the X direction. The upper portion of the tire applier 10 further comprises a central support member 50 having opposed parallel ends 52, 54 joined by a central support shaft 51. Ends 52, 54 are slidably mounted on opposed parallel rails 56 aligned for travel in the X-X direction. The applier conveyor 60 is also rotatably mounted to support shaft 51 which is supported by vertical supports 58 of the central support member 50. The applier conveyor 60 can thus pivot about support shaft 51, slide fore and aft on rails 56 towards tire building drum 70 and optionally slide laterally on rails 30 in the Z-Z direction.

The applier conveyor 60 further comprises a belt 62 driven by internal rollers (not shown) and drive motor 63. The applier conveyor 60 further includes a nose roller 64 located at the front of the applier and a rear roller 66 mounted on shaft 68. The rear of the applier is located adjacent a feed conveyor 72 for feeding a sheet of ply or stock onto the applier.

The shaft 68 on which the rear roller 66 of the applier conveyor belt is mounted also serves a second purpose. It is connected to a single servo arm 80 which is driven by a precision servo motor/reducer 90. The servo arm rotates in the range of 150 to 200 degrees about point 82 in a clockwise direction. The applier is thus driven to and from the drum by this servo-controlled arm 80.

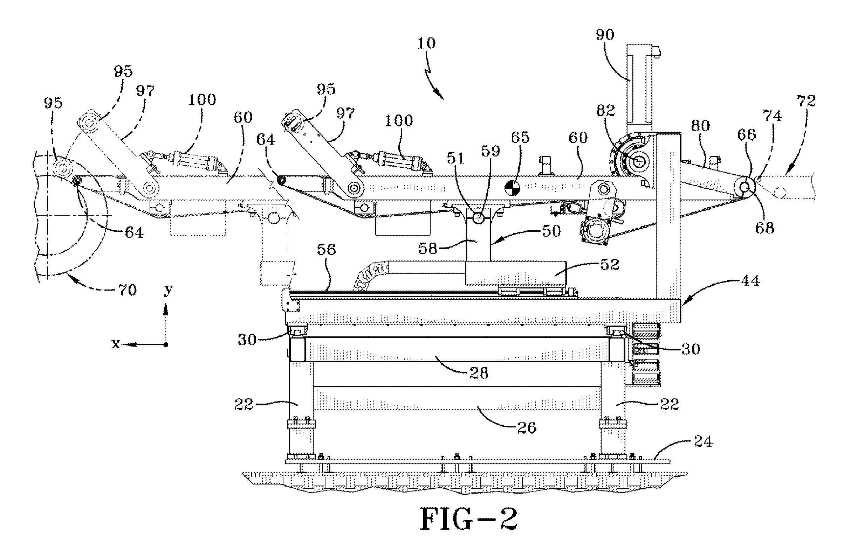

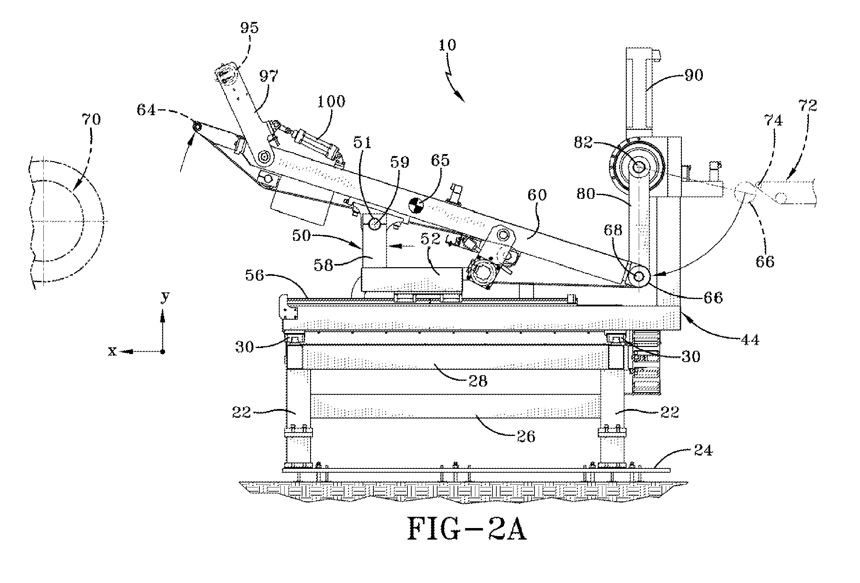

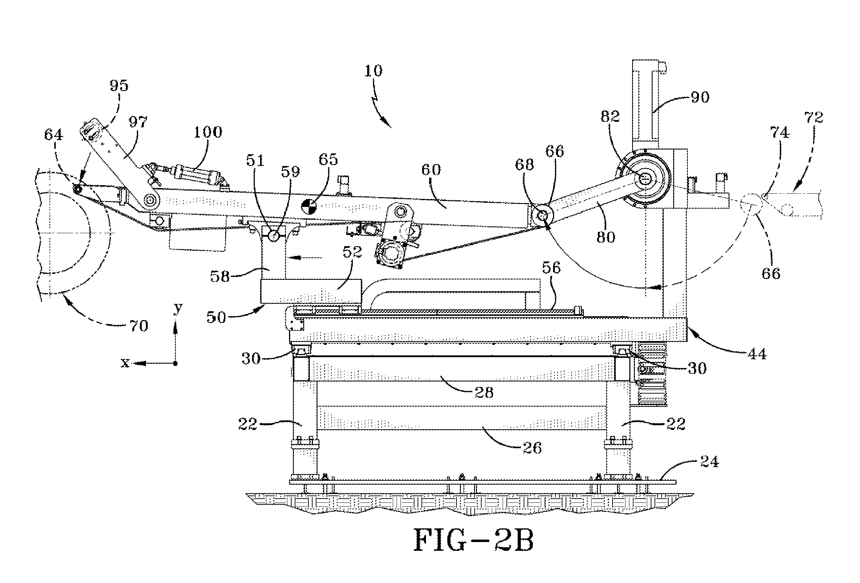

Figure 2 illustrates the applier in the retracted or initial position wherein the servo arm is at 0 degrees. Figure 2A illustrates the applier approaching the drum wherein the servo arm has rotated 90 degrees. Figure 2B illustrates the applier nose in contact with the drum wherein the servo arm 80 has rotated 170 degrees. The applier servo arm rotates counterclockwise to return the applier to its initial position.

It is preferred that the center of gravity 65 of the conveyor 60 be located to the rear of the pivot point 59 of the applier conveyor. Thus the center of gravity 65 is located between the pivot point 59 and the rear 66 of the applier. Thus, the applier conveyor 60 is nearly balanced on top of a pivot shaft mount 58 mounted near the midpoint of the applier. The location of the sliding pivot point 59 just in front of the applier's center of gravity 64 is very helpful to overcome the inertial loads when the applier starts moving towards the drum. The moment arm of the weight of the applier also favorably assists the acceleration and deceleration of the servo arm when the moments about the sliding pivot point are considered.

The applier preferably further includes a stitcher roll 95 which helps adhere the component to the drum. This stitcher roller 95 is located beyond the tangency point of the applier to the drum to assure that the component has contacted the drum before contacting the stitcher roll. If the stitcher roller contacts the component before the component contacts the drum, the stitcher contributes to potential standing waves and component stretching and distortion. This stitcher roller may be made of soft foam or segmented disks in order to conform to component contours and distribute stitching pressures properly. The stitcher roller 95 is mounted upon a rotatable arm 97 positioned adjacent the front the applier. Actuator arm 100 rotates the stitcher roller forward into engagement with the tire building drum in order to stitch the applied component on the drum.

### Cutter System

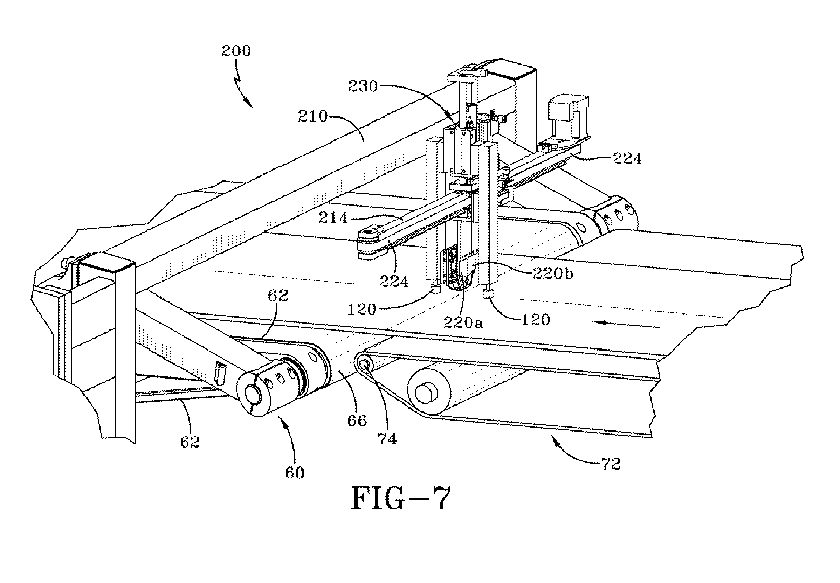

As shown in Figure 7, the invention may further comprise an optional cutting system 200 to cut the feed stock into a tire component of the desired length. The leading edge of the feed stock is advanced forward from a feed conveyor 72 to the applier conveyor 10 until the desired length is reached at the cutting line of the cutting system 200. The cutting system 200 is positioned such that the cutting line is located over the gap between the rear applier roller 66 and the front roller 74 of the feed conveyor 72. The gap between the rollers is approximately 1-2 inches, although it may vary. It is preferred that the feed roller 74 be smaller than the rear applier roller 66 so that a small gap distance may be utilized. This also helps facilitate the transfer of the leading edge of the stock from the feed conveyor onto the applier. Sensors mounted on or adjacent the applier conveyor belt 62 detect when the desired length of the feed stock to be cut has been reached, so that the cutting line of the feed stock is positioned correctly. After the feed stock has been positioned at the cutting line, one or more retractable hold down cylinders 120 are lowered to clamp the feed stock between the conveyor belts. Preferably two hold down cylinders 205 are used, and one is positioned over the end of the applier roller 66 near the centerline to clamp the feed stock while the other hold down cylinder is positioned over the end of the front roller 74 of the feed conveyor to likewise clamp the feed stock. The hold down cylinders 120 have two functions. First, the hold down cylinders function to clamp the feed stock to the conveyor belt and ensure that there is sufficient tension for the blade of the cutter to plunge through the feed stock. Second, as the cutting blades split and traverse away from each other, the hold down cylinders ensure that the blades do not pull the feed stock off center.

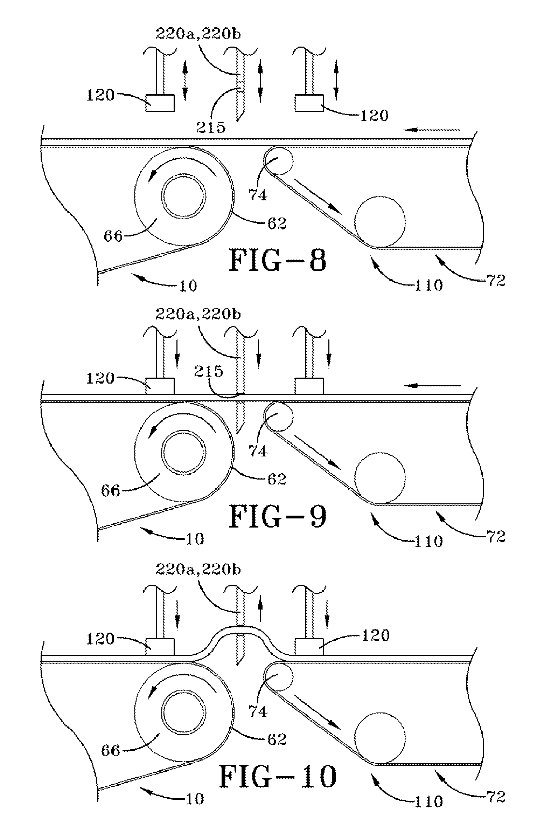

As shown in Figures 7 and 8, the cutting mechanism 200 is mounted over the applier and feed conveyor on a support rail 210. The cutting mechanism 200 further comprises a guide member 214 which is mounted across the feed stock. The guide member 214 is a support frame which houses the belt 224 which actuates the cutting means 220. The cutting means 220 may be a divided blade having two sides 222a, b which split apart after the cutting means is plunged through the center of the feed stock. The blades preferably have a hooked end 215. The cutting means is plunged through the feed stock, and then the belt 224 traverses the blades apart cutting the feed stock into sheets. The invention is not limited to a split blade, as other cutting means such as a single knife may also be used. Blades 222 or cutting means 220 rest upon a hot plate preferably spring loaded and heated to a temperature suitable for cutting ply stock.

The cutting system has the capability of cutting ply with cord angled perpendicular to the conveyor belt longitudinal axis. In addition, the cutting system may cut the feed stock at an angle. For example, if the feed stock is ply having cords oriented within the range of 0 to +/- 45 degrees as measured from longitudinal axis of conveyor belt, the cutting system can cut at an angle with the cord and not through it.

The cutting system 200 has actuators 230 such as a cylinder or ball screw which raise and lower blades 220a, b toward and away from the cutting line. If the ply is being cut at an angle, the cutting system can raise the blades during the cutting operation away from the conveyors and still continue to cut the feed stock. The blades are raised during cutting after the blades are traversed a few inches from the starting point as shown in Figure 10. Raising the blades on the fly during cutting prevents the blades from interfering with the conveyors.

### System Operation

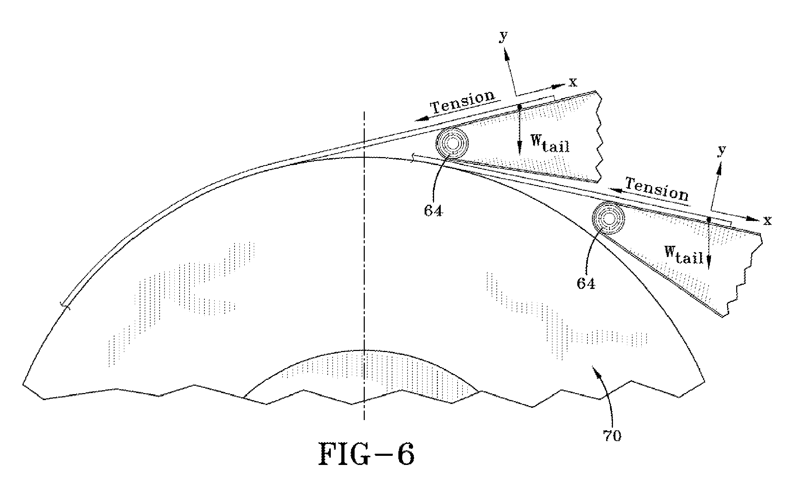

A sheet of ply, liner or other tire component stock is fed onto the rear end of the applier conveyor 60 via a feed conveyor or other device. The sheet of ply may be cut to length using the ply cutter as described above. The applier conveyor belt advances the cut sheet of ply to the front of the applier conveyor. The applier conveyor next approaches the tire building drum by rotating the servo-controlled arm 80 about point 82 in a clockwise manner. The applier conveyor rotates about pivot point 59 in a clockwise manner, thus lifting the nose of the applier upward. As the servo arm continues to rotates (90 degrees) clockwise, the applier conveyor pivots upward as shown in figure 2A. Thus initially, the applier motion is mostly rotational about the sliding pivot point 59 at the start of the cycle. As the servo arm continues to rotate and approaches 90 degrees, the motion of the applier is mostly in a linear direction as the applier slides forward on the rails 56. As shown in Figure 2A, the nose of the applier is still raised at an angle. As the servo arm continues to rotate, the motion of the applier changes from linear to mostly rotational as the applier approaches the tire building drum. The fact that the center of gravity is behind the pivot point assists the operation of the applier by helping to decelerate the applier. As the front end of the applier approaches the drum, the applier is angled upwardly in an inclined position, typically in the range of 5 to 25 degrees (Fig. 2B). The fact that applier is angled upwardly (as opposed to being angled downwardly) when it comes to rest in the apply position at the drum increases the friction force (Ff) between the component and the applier belt during transfer to the drum, resulting in more control of the trailing edge of the stock as illustrated in Figure 6.

Next, the conveyor belt is then rotated, applying the leading edge of the sheet stock to the drum. After the leading edge of the sheet stock is applied to the drum, the roller actuator arm rotates the stitcher roller into engagement with the sheet stock on the drum. The roller and drum rotates to allow stitching of the sheet stock. The actuator arm then rotates the stitcher wheel out into its retracted position, and then the servo arm rotates from approximately 180 degrees back to 0 degrees (starting point) retracting the applier into the start or retracted position.

The geometry and mechanics at work between the applier, the sliding pivot, and the servo-driven control arm make this an extremely fast and accurate applier which outperforms more traditional appliers. In summary, the applier offers a number of advantages as described above. It provides a very quick and controlled motion from the pick-up position to the apply position. It does not "beat itself up" or get knocked out of adjustment or alignment when operating at high speeds. It utilizes only one drive which provides for translation and also compensates for various drum diameters as opposed to prior art systems which have a separate drive and adjustment mechanism. This applier concept also eliminates relatively high maintenance linear drives and replaces them with one very robust and accurate motor/reducer drive. The posture of the applier in an uphill "inclined" orientation at the drum also offers improved control of the rubber component during application, especially the trailing edge. This is due to an increased friction force acting on the component.

## Claims

1. An apparatus for applying a sheet of flexible material to a cylindrical body, the apparatus comprising an applier frame segment being movably mounted on a supporting frame member, and a servo arm being rotatably connected to said applier frame segment for retracting and extending said applier frame segment towards and away from a cylindrical body.

2. The apparatus of claim 1 wherein the applier frame segment is slidably mounted to the supporting frame member in a direction perpendicular to the cylindrical body longitudinal axis.

3. The apparatus of claim 1 wherein the applier frame segment is slidably mounted to the supporting frame member in a direction parallel to the cylindrical body longitudinal axis.

4. The apparatus of at least one of the previous claims wherein the applier frame segment is pivotably mounted to the supporting frame member.

5. The apparatus of claim 4 wherein the applier frame segment center of gravity is located behind the pivot point of the applier frame segment.

6. The apparatus of claim 4 wherein the applier frame segment center of gravity is not located between the pivot point and the leading edge of the applier.

7. The apparatus of at least one of the previous claims wherein the servo arm has a first end connected to a drive motor, and a second end connected to a trailing edge of the applier.

8. The apparatus of claim 4 or 5 wherein the applier frame weight is configured to create a clockwise moment arm about the pivot point.

9. The apparatus of at least one of the previous claims further comprising cutting means for cutting the sheet prior to applying the sheet to the cylindrical body.

10. A method of applying a sheet of elastomer to a cylindrical body, the method comprising the steps of providing an applier frame being movably mounted to a frame assembly, providing a sheet of elastomer to the applier frame, pivoting the applier frame upwards and moving the applier frame towards a cylindrical body, locating the applier frame in an inclined position adjacent the cylindrical body, applying the sheet of elastomer to the cylindrical body, and then retracting the applier frame to its starting position.
